# EUROPÄISCHE PATENTSCHRIFT

(11) **EP 0 783 427 B1**
(45) Veröffentlichungstag und Bekanntmachung des Hinweises auf die Patenterteilung: **22.04.1998**
(21) Anmeldenummer: 95930498.1
(22) Anmeldetag: 18.08.1995
(51) Int. Cl.: B62K 17/00, B62K 3/00

(54) **FAHRGERÄT MIT RÄDERN UND PEDALELEMENTEN**
FOOT-PROPELLED DEVICE WITH WHEELS AND PEDAL ELEMENTS
APPAREIL MOBILE A ROUES ET A PEDALES

(30) Priorität: 29.09.1994 DE 9415598 U
(43) Veröffentlichungstag der Anmeldung: 16.07.1997
(73) Patentinhaber: Hoerz, Erich, 72525 Münsingen (DE)
(72) Erfinder: Hoerz, Erich, 72525 Münsingen (DE)
(74) Vertreter: Götz, Georg, Dipl.-Ing.
(86) Internationale Anmeldenummer: EP9503291
(87) Internationale Veröffentlichungsnummer: WO9609953

(56) Entgegenhaltungen:
- EP-A- 0 274 765
- DE-U- 9 311 547
- GB-A- 1 059 390
- US-A- 3 107 926
- US-A- 5 129 664

## Beschreibung

Die Erfindung betrifft ein Fahrgerät mit mehreren Rädern und mehreren Pedalelementen, die an den Rädern tretkurbelartig angebracht sind, wodurch die Räder angetrieben werden können, gemäß erstem Teil des Anspruchs 1, sowie einen Bausatz dafür, gemäß erstem Teil des Anspruchs 9.

Derartige, nach dem Tretkurbelprinzip arbeitende Fahrgeräte, bei denen die Pedalelemente gegenüber dem jeweiligen Radmittelpunkt exzentrisch und zumindest zum Teil gegeneinander in Radumfangsrichtung versetzt angeordnet sind, sind unter der eingetragenen Marke "pedalo" als Bausatz-System bekannt. Als Grundelement dient ein Einzel-Fahrgerät, bei dem drei nebeneinander laufende Räder durch zwei jeweils dazwischen angeordnete Pedalelemente angetrieben werden können. Dieser Grundbaustein läßt sich dann im Rahmen des bekannten pedalo-Systems beispielsweise durch Zusatz eines zweiten, hinteren Einzel-Fahrgerätes erweitern, das mit dem ersten Fahrgerät über zwei Trittbretter verbunden ist, die jeweils auf zwei in einer fahrtrichtungsparallelen Flucht liegende Pedalelemente montiert sind. Sei diesem so entstandenen Doppel-Fahrgerät läßt sich noch eine Spurerweiterung mittels eines Anbaumoduls herbeiführen. Dieses besteht aus zwei exzentrisch über ein weiteres Pedalelement verbundene Räder, von denen eines oder jedes an die Radaußenseite eines Einzel- oder Doppel-Fahrgerätes anmontiert werden kann. Mittels der Phantasie lassen sich weitere Kombinations- und Gestaltungsmöglichkeiten finden. Außerdem sind die Dreiradmodule in der Herstellung relativ teuer, und die Montage mittels Anbau weiterer Drei- oder Zweiradmodule erfordert eine hohe, aufwendige Präzision bei der Herstellung der Bauteile.

Es ist ein Fahrgerät mit zwei versetzt betätigten Pedalbrettern bekannt (US-A-5 129 664), die dem Antrieb dreier paralleler Radsätze jeweils aus zwei hintereinander angeordneten Rädern dienen. Diese weisen jeweils zwei Achsbohrungen zum Anlenken der Pedalbretter auf, die an exzentrischen Stellen auf dem Rad zueinander symmetrisch angeordnet sind. Das erste Pedalbrett ist auf einem ersten Paar Radachsen montiert, die jeweils an den ersten Achsbohrungen des ersten und zweiten bzw. mittleren Radsatzes angebracht sind. Entsprechend ist das zweite Pedalbrett auf zweiten Radachsen befestigt, die jeweils in den zweiten der symmetrischen Achsbohrungen an den zweiten bzw. mittleren und dritten Radsätzen angebracht sind. Wird das erste Pedalbrett nach oben oder nach vorne bewegt, wird das zweite Pedalbrett entgegengesetzt nach unten oder rückwärts bewegt. Zur Montage wird vorgeschlagen, die Räder in die drei Radsätze mit jeweils zwei hintereinander angeordneten Rädern zu untergliedern, und dann die zwei Pedalbretter mit den Rädern durch Achsbolzen jeweils zwischen zwei der drei Radsätze zu verbinden.

Die US-A-5 129 664 offenbart somit ein Fahrgerät gemäß dem Oberbegriff des Anspruchs 1, wobei die Unterteile einen Bausatz gemäß dem Oberbegriff des Anspruchs 9 darstellen.

Mithin ergibt sich das der Erfindung zugrundeliegende Problem, ein Fahrgerät zu schaffen, das mit vermindertem Aufwand herstellbar und exakter zusammenbaubar ist. Gleichzeitig soll die Kombinationsflexibilität erhöht sein.

Zur Lösung wird ein Fahrgerät mit den im Anspruch 1 genannten Merkmalen erfindungsgemäß vorgeschlagen. Damit wird der herstellungstechnische Vorteil erzielt, daß für das gattungsgemäße Fahrgerät nur noch ein einheitliches Grund- bzw. Basismodul gefertigt werden muß, das gegenüber dem beim pedalo-System bisher notwendigen Dreiradmodul ersichtlich vereinfacht ist. Mit anderen Worten, es läßt sich ein neuartiges pedalo-System schaffen, das sich einzig aus Zweiradmodulen zusammenbauen läßt.

Mit besonderem Vorteil sind zwischen zwei miteinander verbundenen Basismodulen ein oder mehrere Abstandshalter vorgesehen. Hierdurch läßt sich die Spurweite bzw. Breite des Fahrgeräts präzise einstellen bzw. erweitern, insbesondere dann, wenn mehrere Abstandshalter in einer gemeinsamen Flucht hintereinander angeordnet sind. Die Genauigkeit der Einstellung des Abstandes zwischen zwei Basismodulen bzw. der Spurbreite des Fahrgerätes hängt dann von der Größe bzw. Länge der in Reihe hintereinander angeordneten Abstandshalter ab.

Benutzt man das gattungsgemäße Fahrgerät zum ersten Mal, stellt sich das Problem der mangelnden Übung und/oder der unzureichend trainierten Bewegungs- und Gleichgewichtsmotorik. Zu diesem Zweck sind bei dem bekannten pedalo-System zwei Dreiradmodule über Trittbretter in Fahrtrichtung hintereinander gekuppelt. Sind die Trittbretter genügend lang und zudem noch mit vertikal nach oben ragenden, manuell ergreifbaren Stützen versehen, ergibt sich ein sogenanntes Rehabilitations-Fahrgerät, insbesondere geeignet zum Training von Behinderten, Wiedergenesenen und/oder Sportlern. In dieser Hinsicht besteht eine vorteilhafte Ausbildung der Erfindung darin, daß wenigstens zwei Gruppen miteinander parallellaufend verbundener Basismodule (zwei, drei, vier, usw. nebeneinanderlaufend montierte Basis/Zweiradmodule) in Fahrtrichtung hintereinanderangeordnet und mittels ein oder mehrerer Verbindungsglieder aneinandergekuppelt sind. Die Verbindungsglieder können zweckmäßig als Trittelemente, insbesondere als die genannten Trittbretter ausgebildet sein, die dann zweckmäßig in bzw. parallel zur Fahrtrichtung verlaufen. Die so realisierten Verbindungsglieder sind jeweils an Pedalelementen angebracht, die zu in einer gemeinsamen Flucht hintereinanderlaufenden Basismodulen unterschiedlicher (hintereinander angeordneter) Gruppen von mehreren Basismodulen gehören. Die Pedalelemente sind vorzugsweise an der Unterseite der Trittelemente drehbar gelagert.

Im Rahmen der allgemeinen erfinderischen Idee ist zur Realisierung des Fahrgerates ein im Anspruch 9 definierter Bausatz geeignet, der zwei oder mehr Basismodule aus jeweils zwei über ein exzentrisches Kurbelelement drehfest verbundene Räder sowie Verbindungsmittel zur Kopplung der Basismodule derart umfaßt, daß die Räder der gekoppelten Basismodule in Fahrtrichtung parallel und/oder nebeneinander laufen. Soll ein in seiner Länge erweitertes Fahrgerät, das sowohl am Anfang als auch am Ende einen Satz Räder aufweist, geschaffen werden, besteht eine zweckmäßige Erweiterung des erfindungsgemäßen Bausatzes in wenigstens zwei Verbindungsgliedern, mit denen in Fahrtrichtung in einer Flucht laufende Basismodule zweier hintereinander angeordneter Basismodul-Gruppen gekoppelt werden können.

Ferner betrifft die Erfindung ein Fahrgerät der einleitend genannten Art, das mehr als vier in Fahrtrichtung parallel und/oder nebeneinander laufende Räder aufweist und mit wenigstens zwei Pedalelementen versehen ist, die jeweils zwei dieser Räder drehfest verbinden und daran tretkurbelartig angebracht, das heißt gegenüber dem jeweiligen Radmittelpunkt exzentrisch und in Umfangsrichtung zueinander versetzt angeordnet sind.

Derartige Fahrgeräte sind durch das eingangs genannte pedalo-System bekannt geworden: Zur Spurerweiterung werden ein Dreiradmodul und ein Zweiradmodul so aneinander montiert, daß ihre einander zugewandten Räder mit ihren Außenseiten aneinanderliegen, und daß alle fünf Räder nebeneinander parallel laufen. Dabei sind allerdings die Räder des Zwei- und Dreiradmodules jeweils lediglich über exzentrisch angeordnete Pedalelemente verbunden, die beim Fahren sich ständig auf und nieder bewegen. Mithin ergibt sich bei gattungsgemäßen Fahrgeräten ein beachtliches Bedürfnis nach einer Möglichkeit, beim Fahren ein ruhig liegendes Teil beispielsweise als Sitz- oder Liegefläche zur Verfügung zu haben.

Zur Lösung dieser Problematik wird nach einer Ausbildung der Erfindung vorgeschlagen, daß wenigstens zwei der Räder mittels einer zentrischen bzw. mit der Radmittelachse deckungsgleich verlaufenden Welle drehfest verbunden sind. Indem also wenigstens ein Verbindungselement zwischen zwei Rädern nicht exzentrisch, sondern mittig, der Radmittelachse entsprechend positioniert und fixiert ist, läßt sich darauf mit Vorteil ein Traggestell für Sitz- oder Liegeflächen anbringen, das beim Fahren stets ruhig auf gleicher Höhe liegenbleiben kann.

Diese Ausbildung läßt sich leicht mit der erfindungsgemäßen Verwendung zweier Basismodule kombinieren, indem die Welle zentrisch am Rad bzw. an den Rädern entweder eines oder zweier Basismodule angebracht wird. So läßt sich eine Konfiguration schaffen, bei der vier Räder nebeneinander bzw. parallel in Fahrtrichtung laufen, zwischen denen jeweils entweder eines der beiden Pedalelemente oder die zentrische Welle verläuft. Dabei kann die zentrische Welle entweder zwischen den beiden inneren Rädern oder zwischen einem inneren und einem äußeren der vier nebeneinanderlaufenden Räder angeordnet sein.

Weitere Einzelheiten, Merkmale und Vorteile auf der Basis der Erfindung ergeben sich aus den Unteransprüchen und der nachfolgenden Beschreibung bevorzugter Ausführungsbeispiele der Erfindung und den Zeichnungen. Diese zeigen in:
- Fig. 1: in perspektivischer Darstellung eine Grundform des erfindungsgemäßen Fahrgerätes,
- Fig. 2: in perspektivischer Darstellung eine andere Ausbildung des erfindungsgemäßen Fahrgerätes,
- Fig. 3: in perspektivisch-abgebrochener Darstellung eine weitere Ausführungsform des erfindungsgemäßen Fahrgerätes,
- Fig. 4: in auseinandergezogener Vorderansicht die Montage einer Ausführung des erfindungsgemäßen Fahrgerätes,
- Fig. 5: in perspektivischer Darstellung eine weitere Ausführungsform des erfindungsgemäßen Fahrgerätes,
- Fig. 6: in schematischer Vorderansicht eine weitere Ausführung für das erfindungsgemäße Fahrgerät,
- Fig. 7: in perspektivischer Darstellung eine weitere Ausführungsform des erfindungsgemäßen Fahrgerätes, und
- Fig. 8: in perspektivischer Darstellung einen Bausatz zur Montage des erfindungsgemäßen Fahrgerätes in unterschiedlichen Ausführungsformen.

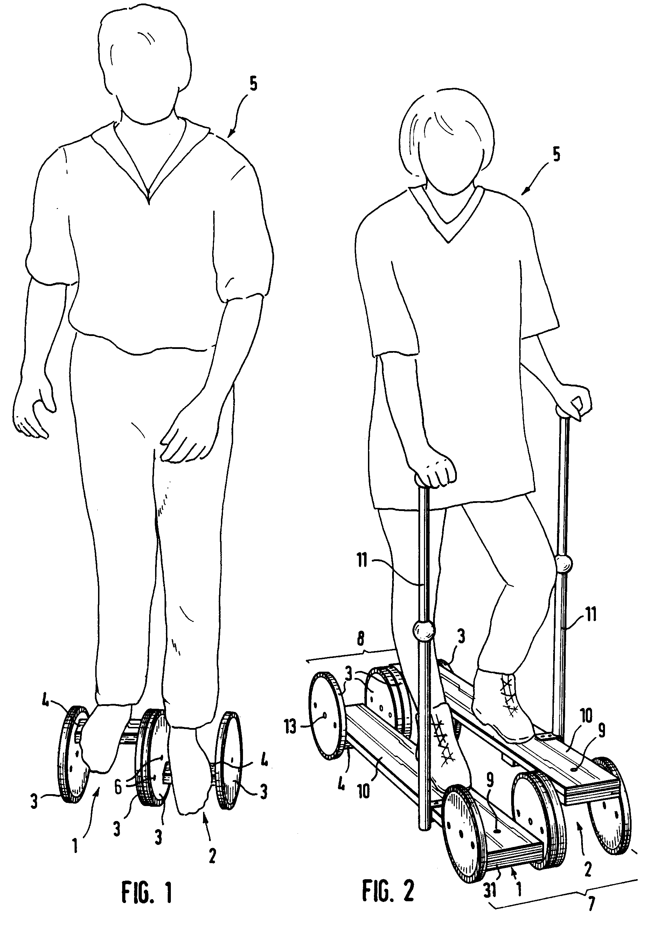

Gemäß Fig. 1 ist ein beispielhaftes Fahrgerät mit zwei Basismodulen 1, 2 gebildet, die jeweils aus zwei Rädern 3 und einem diese Räder drehfest verbindenden Pedalelement 4 gebildet sind. Die Benutzerperson 5 steht gerade mit ihren Füßen auf je einem der Pedalelemente 4, welche zwischen den beiden jeweiligen Rädern 3 der Basismodule 1, 2 exzentrisch verlaufen. Zur Kopplung der beiden Basismodule miteinander sind jeweils die Räder, die einander am nächsten liegen, über zumindest teilweise exzentrische Schraubverbindungen 6 bündig bzw. deckungsgleich aneinandergekuppelt. Dadurch führt ein Hinuntertreten des Pedalelementes 4 des ersten Basismodules 1 dazu, daß über die beiden aneinandergekuppelten inneren Räder 3 der gesamten Anordnung auch die äußeren Räder 3 des zweiten Basismoduls 2 mitgedreht werden.

Gemäß Fig. 2 ist das erfindungsgemäße Fahrgerät zu einem Übungs- und/oder Rehabilitationsgerät erweitert: Neben einer ersten, vorderen Gruppe 7 mit wie in Fig. 1 aneinandergekuppelten Basismodulen 1, 2 ist noch eine zweite, entsprechend ausgebildete Gruppe 8 am hinteren Ende des Fahrgerätes mit vier parallellaufenden Rädern 3 vorgesehen. Auf den beiden Pedalelementen 4, die in Fahrtrichtung gesehen in einer Flucht liegen und unterschiedlichen Gruppen 7, 8 von Basismodulen angehören, ist jeweils über eine Schraubverbindung 9 ein Trittbrett 10 aufmontiert. In der gezeichneten Stellung liegen die beiden nebeneinander verlaufenden Trittbretter 10 zueinander höhenversetzt, was der gegeneinander in Radumfangsrichtung versetzten Stellung der jeweiligen Pedalelemente 4 entspricht, die entweder mit dem rechten oder linken Trittbrett 10 verbunden sind. Zur leichteren Handhabung für die Benutzerperson 5 ist an der Außenseite eines jeden Trittbrettes 10 eine Teleskopstütze 11 angeordnet, die sich senkrecht gegenüber der Trittbrettfläche nach oben erstreckt.

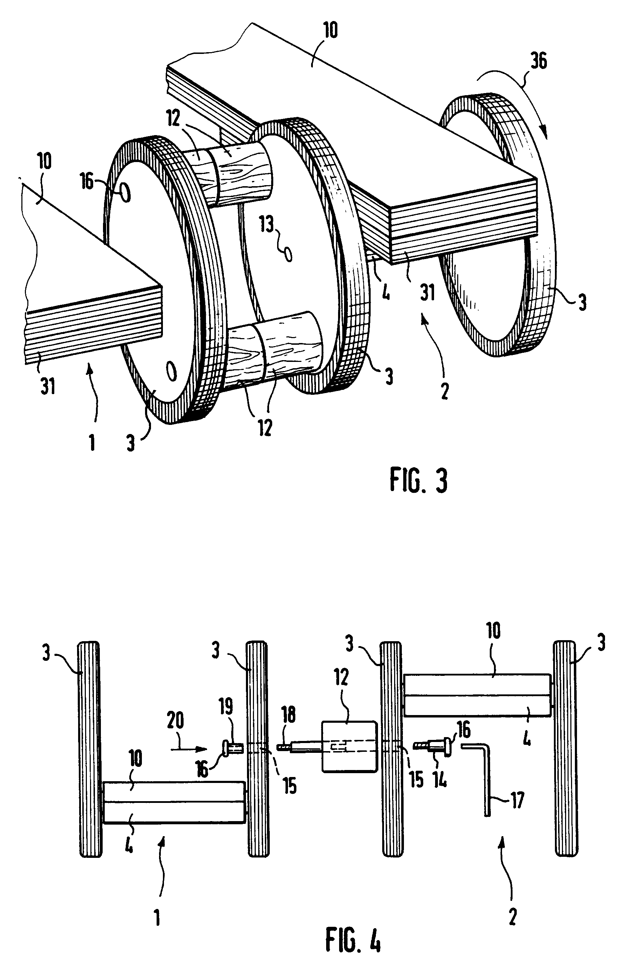

Gemäß Fig. 3 ist die Spurbreite des erfindungsgemäßen Fahrzeugs beispielsweise nach Fig. 2 mittels Abstandshülsen 12 erweitert, die jeweils an der Außenseite bzw. Stirnseite eines Rades 3 unterschiedlicher, aber in Fahrtrichtung nebeneinander verlaufender Basismodule 1, 2 anliegen. Im gezeichneten Beispiel liegen jeweils zwei gegenüber dem Radmittelpunkt 13 exzentrische, zylinderartige Hülsen 12 mit ihren einander zugewandten Stirnseiten aneinander; ihre jeweils entgegengesetzten Stirnseiten liegen an den gegenüberliegenden Stirnseiten der einander am nächsten liegenden Räder 3 miteinander auf gleicher Fahrtrichtungshöhe gekoppelter Basismodule 1, 2.

Gemäß Fig. 4 ist die Kopplung der beiden Basismodule 1, 2 mit nebeneinander laufenden Rädern 3 mittels Verbindungsschrauben 14 realisiert, die durch achsparallele, exzentrische Bohrungen 15 sowie durch die die Bohrung 15 stirnseitig überdeckende Abstandshülse 12 hindurchgeschoben sind. Dabei kommt der Schraubenkopf 16, der über eine (nicht gezeichnete) Mehrkantausnehmung durch den Mehrkantschlüssel 17 drehbar ist, zur hintergreifenden Anlage an die Innenseite des zu verbindenden Rades 3 des einen (in der Zeichnung rechten) Basismodules 2. Das dem Schraubenkopf 16 entgegengesetzte, freie Ende mit Außengewinde 18 der Verbindungsschraube 14 ist einer Mutter 19 zugeordnet, die ebenfalls mit einem Mehrkant-Schraubkopf 16 versehen ist und durch eine exzentrische Verbindungsbohrung 15 hindurchzustecken ist, so daß sie in Eingriff mit dem Außengewinde 18 kommen kann. Die Einsteckrichtung 20 für die Mutter 19 ist zeichnerisch angedeutet.

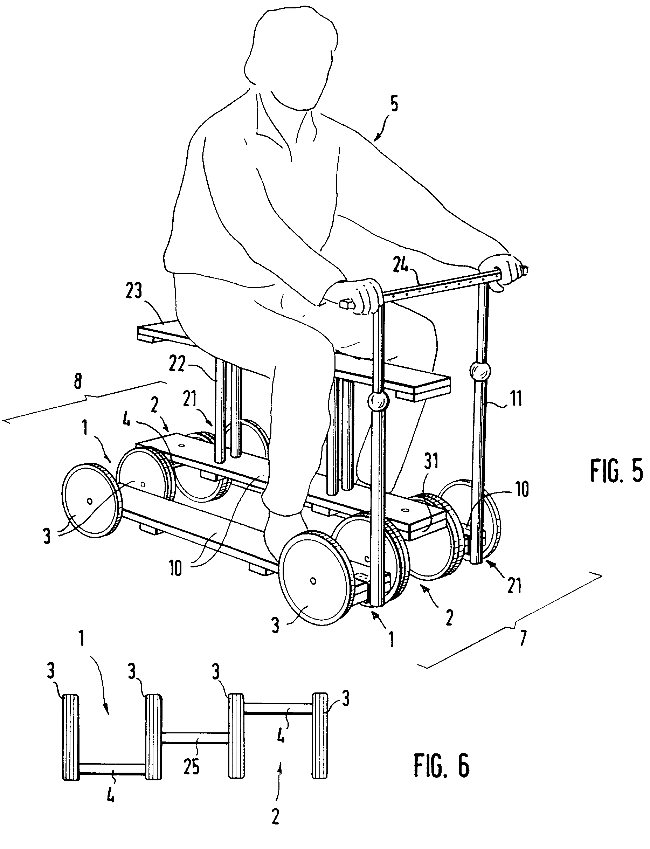

Auch gemäß Fig. 5 sind zwei in Fahrtrichtung hintereinander angeordnete Gruppen 7, 8 mit jeweils parallel nebeneinander gekoppelten Basismodulen vorgesehen. Jede dieser Gruppen weist drei Basismodule 1, 2, 21 auf, die in Reihe quer zur Fahrtrichtung nacheinander aneinandergekoppelt sind, analog wie in Fig. 1 oder 2 gezeigt, das heißt ohne Abstandshülsen dazwischen. Die jeweils zwei Pedalelemente 4 von Basismodulen, die in Fahrtrichtung in einer gemeinsamen Flucht liegen, sind über Trittbretter 10 miteinander verbunden, analog Fig. 2. In der gezeichneten Stellung liegen die beiden äußeren Trittbretter 10 gegenüber dem Boden auf gleicher Höhe, während das mittlere Trittbrett 10 nach oben versetzt ist. Dies beruht darauf, daß die Pedalelmente 4, auf welche die Trittbretter 10 montiert sind, teilweise in Umfangsrichtung zueinander versetzt liegen. Während die Pedalelemente 4 der jeweils äußeren Basismodule 1, 21 bezüglich des Radumfangs bzw. der Winkelstellung gleich angeordnet sind, weisen die jeweiligen Pedalelemente der beiden mittleren Basismodule 2 eine andere Radumfangs- bzw. Winkelstellung, vorzugsweise um 180° versetzt, auf. Das mittlere Trittbrett 10 trägt über ein Gestell 22 aus senkrecht verlaufenden Tragestangen ein Sitzbrett 23 für die Benutzerperson 5. Deren Hände umfassen einen Querbarren 24, der die freien, oberen Enden zweier Teleskopstützen 11 miteinander verbindet. Die unteren Enden der Teleskopstützen 11 sind an den vorderen Stirnseiten der beiden äußeren Trittbretter befestigt. Erteilt die Benutzerperson 5 über ihre Füße den beiden äußeren Trittbrettern 10 und damit den darunterbefindlichen Pedalelemten 4 eine Kraft bzw. Beschleunigung, werden alle Räder 3 in Drehung versetzt. Dabei bewegen sich einerseits die beiden äußeren Trittbretter 10 und andererseits das mittlere Trittbrett mit der Sitzfläche 23 stets zueinander versetzt nach oben und unten, entsprechend der winkelmäßig verschobenen Anordnung der Pedalelemente 4 der inneren Basismodule 2 gegenüber den Pedalelementen 4 der beiden äußeren Basismodule 1, 21 jeweils bezüglich dem Umfang der koaxial angeordneten Räder 3.

Mit der in Fig. 6 angedeuteten Anordnung ließe sich erreichen, daß die mittig angeordnete Sitzfläche 23 gemäß Fig. 5 sich bei Fahrbewegung nicht oben und unten bewegen würde. Denn von den vier in Fahrtrichtung nebeneinander angeordneten Rädern 3 sind die beiden inneren mit einer zentrischen Welle 25 miteinander drehfest verbunden, während die beiden äußeren Räder jeweils über ein exzentrisches Pedalelement 4 mit dem nächstliegenden, inneren Rad 3 drehfest verbunden sind.

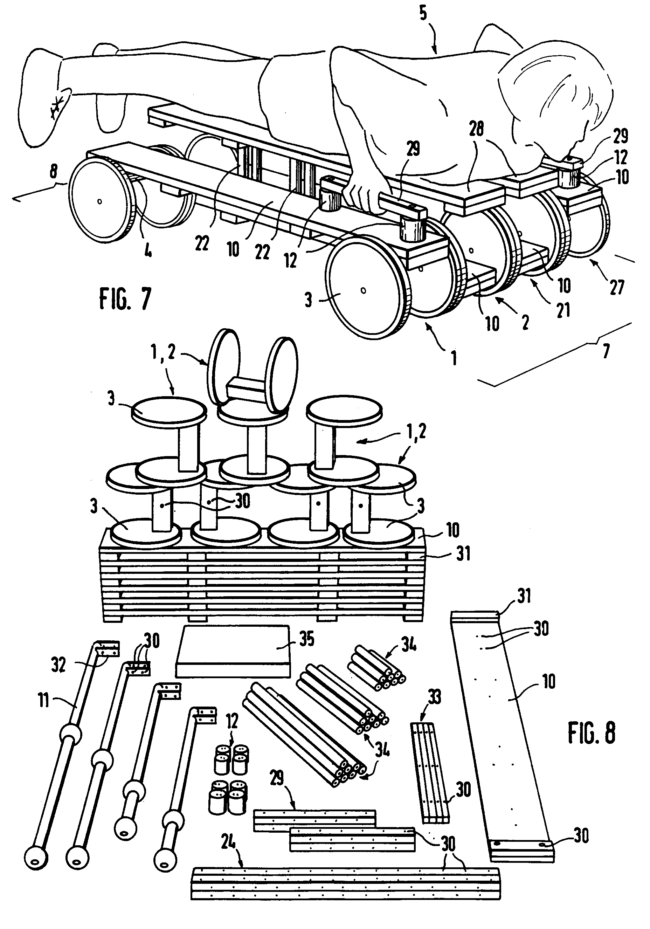

Gemäß Fig. 7 sind, analog Fig. 2 und 5, zwei Gruppen 7, 8 mit jeweils vier nebeneinander laufenden Basismodulen 1, 2, 21, 27 miteinander über vier sich parallel erstreckende Trittbretter 10 gekoppelt. Die Pedalelemente 4 der jeweils inneren Basismodule 2, 21 beider Gruppen 7, 8 sind bezüglich des Radumfanges, der in der vorderen Gruppe 7 als auch in der hinteren Gruppe 8 jeweils deckungsgleich für alle Räder 3 ist, in gleicher Winkelstellung angeordnet. Somit befinden sich die beiden inneren Trittbretter 10 mit darunter befestigten Pedalelementen 4 stets auf gleicher Höhe. Dagegen sind die Pedalelemente 4 der äußeren Basismodule 1, 27 in einer anderen, vorzugsweise um 180° versetzten Winkelstellung angeordnet, so daß die beiden äußeren Trittbretter 10 stets eine entsprechend verschobene Umlauf-Stellung gegenüber den beiden inneren Trittbrettern aufweisen. Von der Oberfläche der beiden inneren Trittbretter 10 erstrecken sich jeweilige Gestelle 22, die zum Tragen von zwei parallelen Liegebrettern 28 für die Benutzerperson 5 dienen. Die beiden Liegebretter 28 verlaufen jeweils deckungsgleich mit den beiden inneren Trittbrettern 10. Auf den beiden äußeren Trittbrettern 10 im vorderen Bereich sind Griffleisten 29 befestigt. Damit sie von der Benutzerperson 5 umgriffen werden können, sind sie an ihren jeweiligen Enden mittels Abstandshülsen 12 im Abstand von der Oberfläche des jeweiligen Trittbrettes 10 gehalten. Mittels der Griffleisten 29 kann den beiden äußeren Trittbrettern 10 eine Kraft und damit ein Drehmoment erteilt werden, wodurch das gesamte Fahrgerät in eine Dreh- bzw. Fahrbewegung versetzt wird.

## Patentansprüche

1. Fahrgerät, mit mehreren Rädern (3) und mehreren an den Rädern zu deren Antrieb tretkurbelartig angebrachten Pedalelementen (4), die gegenüber dem jeweiligen Radmittelpunkt (13) exzentrisch und zumindest zum Teil in Radumfangsrichtung (36) gegeneinander versetzt angeordnet sind, **gekennzeichnet durch** die Bildung mit zwei oder mehr aneinander gekoppelten Basismodulen (1,2,21,27), die jeweils für sich einheitlich mit zwei Rädern (3) gefertigt sind, die über je eines der Pedalelemente (4) drehfest miteinander verbunden sind wobei die einander am nächsten liegenden Räder (3) unterschiedlicher Basismodule (1,2,21,27) derart miteinander drehfest verbunden sind, daß diese Räder (3) in Fahrtrichtung parallel und nebeneinander laufen und wobei ausschließlich Räder dieser Basismodule zum Fahren verwendet sind,

2. Fahrgerät nach Anspruch 1, dadurch gekennzeichnet, daß die einander am nächsten liegenden Räder (3) der unterschiedlichen Basismodule (1,2,21,27) durch eine oder mehrere, exzentrisch angeordnete Schraubverbindungen (14,15,16,18,19) aneinander montiert sind.

3. Fahrgerät nach Anspruch 1 oder 2, gekennzeichnet durch einen oder mehrere Abstandshalter zwischen zwei miteinander verbundenen Basismodulen (1,2,21,27).

4. Fahrgerät nach Anspruch 3, dadurch gekennzeichnet, daß die Abstandshalter als die Verbindungsmittel zwischen Basismodulen (1,2,21,27) umgebende Hülsen (12) zur Anlage an die verbundenen Basismodule (1,2,21,27) und gegebenenfalls in einer Flucht aneinander ausgebildet sind.

5. Fahrgerät nach einem der vorangehenden Ansprüche, dadurch gekennzeichnet, daß wenigstens zwei Gruppen (7,8) miteinander parallel laufend verbundener Basismodule (1,2,21,27) in Fahrtrichtung hintereinander angeordnet und mittels ein oder mehrerer Verbindungsglieder aneinander gekuppelt sind.

6. Fahrgerät nach Anspruch 5, gekennzeichnet durch ein oder mehrere als Trittelemente (10) ausgebildete Verbindungsglieder, an die jeweils die Pedalelemente (4) von in einer Flucht hintereinander laufenden Basismodulen (1,2,21,27) unterschiedlicher Gruppen (7,8) drehgelagert fixiert sind.

7. Fahrgerät nach einem der vorangehenden Ansprüche, mit wenigstens vier in Fahrtrichtung parallel und/oder nebeneinander laufenden Rädern (3), und mit wenigstens zwei Pedalelementen (4), die jeweils zwei dieser Räder (3) drehfest verbinden und daran tretkurbelartig angebracht sind, indem sie gegenüber dem jeweiligen Radmittelpunkt (13) exzentrisch und in Radumfangsrichtung (36) gegeneinander versetzt angeordnet sind, dadurch gekennzeichnet, daß wenigstens zwei der Räder (3) mittels einer zentrischen beziehungsweise mit der Radmittelachse deckungsgleich verlaufenden Welle (25) drehfest verbunden sind, die zentrisch am Rad (3) beziehungsweise an den Rädern (3) eines oder zweier Basismodule (1,2,21,27) angebracht ist.

8. Fahrgerät nach Anspruch 7, dadurch gekennzeichnet, daß die zentrische Welle (25) mit einem oder mehreren Traggestellen (22) beispielsweise für Sitz- oder Liegeflächen (23,28) versehen ist.

9. Bausatz für das Fahrgerät nach einem der vorangehenden Ansprüche, mit mehreren Rädern (3) und mehreren an den Rädern zu deren Antrieb tretkurbelartig anbringbaren Pedalelementen (4), die gegenüber dem jeweiligen Radmittelpunkt (13) exzentrisch und zumindest zum Teil in Radumfangsrichtung (36) gegeneinander versetzt angeordnet sind, **gekennzeichnet durch** zwei oder mehr Basismodule (1,2,21,27), zu denen jeweils zwei der über je eines der Pedalelemente (4) drehfest verbundenen Räder für sich einheitlich gefertigt sind, und durch Verbindungsmittel, sodaß Räder (3) unterschiedlicher Basismodule (1,2,21,27) in Fahrtrichtung drehfest, parallel und nebeneinander laufend verbindbar sind, und wodurch die zwei oder mehr Basismodule (1,2,21,27) so aneinanderkoppelbar sind, daß ausschließlich Räder (3) der Basismodule für das Fahren zum Einsatz kommen,

10. Bausatz nach Anspruch 9 für das Fahrgerät nach Anspruch 5 oder 6, mit wenigstens vier Basismodulen (1,2,21,27), gekennzeichnet durch wenigstens zwei Verbindungsglieder (10) zur Kopplung von in Fahrtrichtung in einer Flucht laufenden Basismodulen (1,2,21,27).

11. Bausatz nach Anspruch 9 oder 10, gekennzeichnet durch einen oder mehr Abstandshalter, die zur Anordnung und Anlage zwischen beziehungsweise an zu verbindende Basismodule (1,2,21,27) ausgebildet sind.

12. Bausatz nach Anspruch 11, wobei die Verbindungsmittel achsparallele exzentrische Bohrungen (15) durch die Räder (3) und entsprechende Verbindungsbolzen und/oder -schrauben (14) umfassen, dadurch gekennzeichnet, daß die Abstandshalter als Hülsen (12) zum Durchschieben der Verbindungsbolzen und/oder -schrauben (14) und mit größerem Durchmesser als die exzentrischen Radbohrungen (15) ausgebildet sind.

## Claims

1. A propelled device with several wheels (3) and several pedal elements (4) attached to the wheels in the manner of a pedal crank to drive them, which pedal elements are arranged eccentrically with respect to the respective wheel centre-point (13) and at least partially offset with respect to each other in the direction of wheel circumference (36), characterised in that it is formed with two or more base modules (1, 2, 21, 27) coupled together, each of which is produced for itself uniformly with two wheels (3) which are connected together in a rotation-resistant manner via one of the pedal elements (4) in each case, the wheels (3) lying closest together of different base modules (1, 2, 21, 27) being connected together in a rotation-resistant manner in such a way that these wheels (3) run parallel and next to each other in the direction of travel, whereby exclusively wheels of these base modules are used for travel.

2. A propelled device as claimed in claim 1, wherein the wheels (3) lying closest together of the different base modules (1, 2, 21, 27) are mounted on each other by means of one or more eccentrically arranged screw connections (14, 15, 16, 18, 19).

3. A propelled device as claimed in claim 1 or 2, wherein it comprises one or more spacers between two base modules (1, 2, 21, 27) connected together.

4. A propelled device as claimed in claim 3, wherein the spacers are formed as sleeves (12) surrounding the connecting means between base modules (1, 2, 21, 27) for resting on the connected base modules (1, 2, 21, 27) and optionally in a line on each other.

5. A propelled device as claimed in one of the preceding claims, wherein at least two groups (7, 8) of base modules (1, 2, 21, 27) connected together so that they run parallel are arranged one behind the other in the direction of travel and are coupled together by means of one or more connection elements.

6. A propelled device as claimed in claim 5, wherein it comprises one or more connection elements formed as tread elements (10) to which the respective pedal elements (4) of base modules (1, 2, 21, 27), running one behind the other in a line, of different groups (7, 8) are fixed in a rotatably mounted manner.

7. A propelled device as claimed in one of the preceding claims, with at least four wheels (3) running parallel and/or next to each other in the direction of travel and with at least two pedal elements (4) which connect two of these wheels in each case in a rotation-resistant manner and are attached thereto in the manner of a pedal crank, in that they are arranged eccentrically with respect to the respective wheel centre-point (13) and offset with respect to each other in the wheel circumferential direction (36), wherein at least two of the wheels (3) are connected in a rotation-resistant manner by means of a shaft (25) which is centric and/or runs coincident with the wheel centre axle, which shaft is fitted centrically to the wheel (3) and/or the wheels (3) of one or two base modules (1, 2, 21, 27).

8. A propelled device as claimed in claim 7, wherein the centric shaft (25) is provided with one or more support frames (22), for surfaces to sit or lie on (23, 28) for example.

9. A kit for the propelled device as claimed in one of the preceding claims, with several wheels (3) and several pedal elements (4) attachable to the wheels in the manner of a pedal crank to drive them, which pedal elements are arranged eccentrically with respect to the respective wheel centre-point (13) and at least partially offset with respect to each other in the direction of wheel circumference (36), characterised in that it comprises two or more base modules (1, 2, 21, 27), to which two in each case of the wheels connected in a rotation-resistant manner via one in each case of the pedal elements (4) are produced for themselves uniformly, and connecting means such that wheels (3) of different base modules (1, 2, 21, 27) can be connected in a rotation-resistant manner, parallel and running next to each other in the direction of travel and by means of which the two or more base modules (1, 2, 21, 27) can be coupled together in such a way that exclusively wheels (3) of the base modules are used for travel.

10. A kit as claimed in claim 9 for the propelled device as claimed in claim 5 or 6, with at least four base modules (1, 2, 21, 27), wherein it comprises at least two connection elements (10) to couple base modules (1, 2, 21, 27) running in a line in the direction of travel.

11. A kit as claimed in claim 9 or 10, wherein it comprises one or more spacers which are formed for arrangement and resting between and/or on base modules (1, 2, 21, 27) to be connected.

12. A kit as claimed in claim 11, in which the connecting means comprise axis-parallel eccentric bores (15) through the wheels (3) and corresponding connecting bolts and/or screws (14), wherein the spacers are formed as sleeves (12) for the pushing-through of the connecting bolts and/or screws (14) and with larger diameter than the eccentric wheel bores (15).

## Revendications

1. Appareil mobile, comportant plusieurs roues (3) et plusieurs éléments formant pédale (4) montés sur les roues afin d'assurer leur entraînement à la façon d'une manivelle de pédalier, les éléments formant pédale étant disposés de façon excentrique par rapport aux centres (13) respectifs des roues et décalés, au moins en partie, les uns par rapport aux autres, dans la direction périphérique (36) des roues, caractérisé par le fait d'être formé avec deux modules de base (1, 2, 21, 27), ou plus, couplés les uns aux autres, fabriqués chacun pour soi de façon unitaire avec deux roues (3) reliées entre elles et non tournant l'une par rapport à l'autre, par l'intermédiaire de l'un des éléments formant pédale (4), les roues (3) placées le plus près possible les unes des autres, mais appartenant à des modules de base (1, 2, 21, 27) différents étant reliées entre elles et non tournant l'une par rapport à l'autre de manière que ces roues (3) se déplacent parallèlement et les unes à côté des autres dans la direction de roulage, et le déplacement se faisant en utilisant exclusivement des roues de ces modules de base.

2. Appareil mobile selon la revendication 1, caractérisé en ce que les roues (3), placées le plus près possible les unes des autres, mais appartenant à différents modules de base (1, 2, 21, 27), sont montées en étant fixées les unes aux autres au moyen d'une ou plusieurs liaisons à vissage (14, 15, 16, 18, 19) disposées de façon excentrée.

3. Appareil mobile selon la revendication 1 ou 2, caractérisé par un ou plusieurs organes d'espacement montés entre deux modules de base (1, 2, 21, 27) reliés ensemble.

4. Appareil mobile selon la revendication 3, caractérisé en ce que les organes d'espacement sont réalisés sous forme de douilles (12) entourant les moyens de liaison entre les modules de base (1, 2, 21, 27), conçues pour venir en appui sur les modules de base (1, 2, 21, 27) ayant été reliés et, le cas échéant, réalisés en alignement et adjacents les unes par rapport aux autres.

5. Appareil mobile selon l'une des revendications précédentes, caractérisé en ce qu'au moins deux groupes (7, 8) de modules de base (1, 2, 21, 27), reliés ensemble et se déplaçant parallèlement, sont disposés l'un derrière l'autre dans la direction de roulage et sont couplés les uns aux autres au moyen d'un ou plusieurs organes de liaison.

6. Appareil mobile selon la revendication 5, caractérisé par un ou plusieurs organes de liaison réalisés sous forme d'éléments de pose de pied (10), auxquels sont fixés respectivement, avec une possibilité de rotation, les éléments formant pédale (4), appartenant à des modules de base (1, 2, 21, 27) se déplaçant l'un derrière l'autre en alignement et appartenant à des groupes (7, 8) différents.

7. Appareil mobile selon l'une des revendications précédentes, comportant au moins quatre roues (3) se déplaçant parallèlement et/ou les unes à côté des autres dans la direction de roulage, et avec au moins deux éléments formant pédale (4) qui relient chaque fois deux de ces roues (3) et sont montés sur elles à la façon d'une manivelle de pédalier, en étant disposés de façon excentrée par rapport aux centres (13) respectifs de roues et décalés les uns par rapport aux autres dans la direction périphérique (36) des roues, caractérisé en ce qu'au moins deux des roues (3) sont reliées de façon assujettie en rotation au moyen d'un arbre (25) s'étendant de façon centrée, respectivement en coïncidence avec l'axe de roue, l'arbre étant monté de façon centrée sur la roue (3), respectivement sur les roues (3) d'un ou de deux modules de base (1, 2, 21, 27).

8. Appareil mobile selon la revendication 7, caractérisé en ce que l'arbre centré (25) est pourvu d'un ou plusieurs bâtis support (22), par exemple destinés à recevoir des surfaces d'assise ou de positionnement allongé (23, 28).

9. Kit pour l'appareil mobile selon l'une des revendications précédentes, comportant plusieurs roues (3) et plusieurs éléments formant pédale (4) susceptibles d'être montés sur les roues à la façon d'un pédalier de manivelle pour assurer leur entraînement, les éléments formant pédale étant disposés de façon excentrée par rapport aux centres (13) de roues respectifs et au moins en partie décalés les uns par rapport aux autres, dans la direction périphérique (36), caractérisé par deux ou plusieurs modules de base (1, 2, 21, 27), pour chacun desquels deux des roues reliées entre elles et non tournant l'une par rapport à l'autre par l'intermédiaire de l'un des éléments formant pédale (4), sont fabriquées de façon unitaire en soi, et par des moyens de liaison, de manière que des roues (3) appartenant à des modules de base (1, 2, 21, 27) différents soient susceptibles d'être reliées entre elles non tournant l'une par rapport à l'autre dans la direction de roulage et en se déplaçant parallèlement les unes à côté des autres, faisant que les deux modules de base (1, 2, 21, 27), ou plus, sont susceptibles d'être accouplés les uns aux autres de manière que soient exclusivement utilisées pour le déplacement des roues (3) appartenant aux modules de base.

10. Kit selon la revendication 9 pour l'appareil mobile selon la revendication 5 ou 6, comportant au moins quatre modules de base (1, 2, 21, 27), caractérisé par au moins deux organes de liaison (10) servant au couplage de modules de base (1, 2, 21, 27) alignés dans la direction de roulage.

11. Kit selon la revendication 9 ou 10, caractérisé par un ou plusieurs organes d'espacement réalisés pour le montage et l'appui entre, respectivement sur, des modules de base (1, 2, 21, 27) à relier.

12. Kit selon la revendication 11, les moyens de liaison comprenant des perçages (15) excentriques, parallèles à l'axe, percés à travers les roues (3) et des organes de liaison et/ou des vis de liaison (14) correspondantes, caractérisé en ce que les organes d'espacement sont réalisées sous forme de douilles (12) destinées au passage des boulons de liaison et/ou des vis de liaison (14) et dotées d'un diamètre supérieur au diamètre des perçages de roues (15) excentriques.
